# EUROPÄISCHE PATENTSCHRIFT

(11) **EP 2 102 969 B1**
(45) Veröffentlichungstag und Bekanntmachung des Hinweises auf die Patenterteilung: **23.09.2015**
(21) Anmeldenummer: 07821790.8
(22) Anmeldetag: 24.10.2007
(51) Int. Cl.: H02K 5/14, H02K 1/17

(54) **POLGEHÄUSEANORDNUNG**
POLE HOUSING ARRANGEMENT
ENSEMBLE DE CARCASSE DE STATOR

(30) Priorität: 19.12.2006 DE 102006059930
(43) Veröffentlichungstag der Anmeldung: 23.09.2009
(73) Patentinhaber: Robert Bosch GmbH, 70442 Stuttgart (DE)
(72) Erfinder: HURST, Richard, 77652 Offenburg (DE); SAUER, Christian, 77746 Schutterwald (DE); HEYDER, Martin, 77833 Ottersweier (DE)
(86) Internationale Anmeldenummer: PCT/EP2007/061427
(87) Internationale Veröffentlichungsnummer: WO 2008/074552

(56) Entgegenhaltungen:
- EP-A- 0 334 662
- EP-A- 0 645 875
- WO-A-99/00885
- DE-A1- 1 941 169
- FR-A- 2 282 182
- FR-A- 2 808 937
- US-A- 2 971 107
- US-A1- 2005 174 010

## Beschreibung

### Stand der Technik

Die Erfindung betrifft eine Polgehäuseanordnung eines elektrischen Antriebsmotors, insbesondere für Wischvorrichtungen in Kraftfahrzeugen gemäß dem Oberbegriff des Anspruchs 1.

Aus der US 6,343,403 B1 ist eine Polgehäuseanordnung eines Antriebsmotors einer Scheibenwischanlage bekannt, bei der das Polgehäuse am Getriebegehäuse angeflanscht ist.

Aus der US 2971107 D2 ist ein Gegenstand gemäß der Gattung des unabhängigen Anspruchs bekannt.

Üblicherweise ist bei derartigen Polgehäuseanordnungen der Bürstenträger des Antriebsmotors nicht im Polgehäuse, sondern im Getriebegehäuse aufgenommen und das die Statormagneten sowie einen drehbaren Anker enthaltende Polgehäuse ist mit dem Getriebegehäuse verschraubt. Insbesondere bei Scheibenwischermotoren wird eine zweite Drehzahlstufe häufig durch einen unterschiedlichen Kommutierungswinkel (beispielsweise 3-Bürsten-System) erzeugt, wodurch die Winkeltoleranz zwischen dem Magnetfeld (Lage der Statormagneten) und dem Bürstensystem möglichst klein zu halten ist. Bei bekannten Polgehäusen sind die Statormagnete üblicherweise mit dem Polgehäuse verklebt oder mittels Haltefedern in diesem fixiert. Die Relativausrichtung zwischen den Statormagneten und dem Bürstenhalter erfolgt indirekt über eine Ausrichtung des Polgehäuses relativ zu dem Getriebegehäuse, wobei das Polgehäuse hierzu im Stand der Technik mit einer einseitigen Ausprägung versehen ist, die in eine Tasche am Getriebegehäuse eingreift, wodurch die Zentrierung erzielt wird. Die Toleranzkette zwischen den Statormagneten und dem Bürstenhalter ist hierbei sehr lang und erstreckt sich von den Statormagneten über das Polgehäuse, das Getriebegehäuse bis zu dem Bürstenhalter. Zentrierungsungenauigkeiten zwischen den Statormagneten und dem Bürstenhalter sind zwangsläufig unvermeidbar.

Die DE 19 41 169 A1 beschreibt einen elektrischen Generator mit Permanentmagneten, bei dem die Magnete durch Klemmhalterungen gehalten und relativ zu einem Bürstenträger ausgerichtet werden.

### Offenbarung der Erfindung

### Technische Aufgabe

Der Erfindung liegt daher die Aufgabe zugrunde eine Polgehäuseanordnung vorzuschlagen, bei der die Statormagnete möglichst exakt relativ zu dem Bürstenhalter ausgerichtet sind.

### Technische Lösung

Diese Aufgabe wird mit den Merkmalen des Anspruchs 1 gelöst.

Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, die Toleranzkette zwischen den im Polgehäuse angeordneten Statormagneten und dem getriebegehäuseseitigen Bürstenhalter zu verkürzen. Hierzu ist gemäß der Erfindung vorgesehen, an einem zwischen dem Statormagneten angeordneten Abstandhalter, an dem zwei benachbarte Statormagnete unmittelbar anliegen, min destens ein erstes Zentriermittel vorzusehen, welches unmittelbar mit mindestens einem zweiten Zentriermittel am Bürstenhalter zusammenwirkt. Hierdurch muss die Ausrichtung zwischen dem Magnetfeld und dem Bürstenhalter nicht mehr über die Ausrichtung der Getriebegehäuse zueinander vorgenommen werden, sondern der Abstandhalter mit den an ihm anliegenden Magneten wird unmittelbar zu dem Bürstenhalter ausgerichtet. Hierdurch wird eine hochgenaue Relativposition zwischen Magnetfeld und Bürsten sichergestellt. Weiterhin ist es möglich, ein einfaches, symmetrisches Polgehäuse ohne jegliche Zentrier- das heißt Ausrichtmittel vorzusehen, wodurch die Herstellkosten trotz einer exakteren Ausrichtung der Statormagnete zu dem Bürstenhalter reduziert werden.

Mit Vorteil ist eines der beiden Zentriermittel als sich in Richtung des gegenüberliegenden Zentriermittels erstreckende Zentriernase bzw. Zentrierfortsatz ausgebildet, wobei die Zentriernase in das als Aufnahmetasche oder Aufnahmeöffnung ausgebildete gegenüberliegende Zentriermittel, vorzugsweise formkongruent eingreift. Dabei ist eine Ausführungsform bevorzugt, bei der die Zentriernase am Abstandhalter und die Aufnahmetasche am Bürstenhalter angeordnet ist. Vorzugsweise ist die Aufnahmetasche mit zumindest einer Einlaufschräge zur erleichterten Findung bei der Montage ausgestattet.

Um einen definierten Abstand zwischen den, insbesondere beiden gegenüberliegenden Statormagneten einzustellen, weist der erste Abstandhalter mindestens zwei voneinander beabstandete, gegenüberliegende Anschläge auf, wobei jedem Statormagnet mindestens ein Anschlag zugeordnet ist. Der Abstand zwischen diesen Anschlägen ist unveränderlich, so dass von dem Abstandhalter ein definierter (Mindest)abstand zwischen den Statormagneten begrenzt ist.

Um ein unbeabsichtiges Lösen des Abstandshalters zu verhindern, insbesondere dann, falls die Magnete zusätzlich mit dem Polgehäuse verklebt werden, ist in Weiterbildung der Erfindung mit Vorteil vorgesehen, dass der erste Abstandhalter in mindestens einem Bereich federnd ausgebildet ist. Vorzugsweise ist der Abstandhalter auf zwei gegenüberliegenden Seiten federnd ausgebildet, um eine Federkraft auf die Statormagnete in Richtung der Polgehäuseinnenwand auszuüben.

Eine Möglichkeit zur federnden Ausbildung des Abstandhalters besteht darin, dass der erste Abstandhalter mindestens ein Federelement aufweist, das einen der Anschläge im nicht montierten Zustand überragt.

In Weiterbildung der Erfindung ist mit Vorteil zusätzlich zu dem ersten Abstandhalter, welcher insbesondere derart ausgebildet ist, dass er einen definierten Mindestabstand zwischen den Statormagneten begrenzt, ein weiterer, zweiter Abstandhalter, insbesondere auf der dem ersten Abstandhalter gegenüberliegenden Seite des Polgehäuses zwischen den, insbesondere zwei, Statormagneten angeordnet. Der zweite Abstandhalter ist bevorzugt als reines Federelement, insbesondere als Bügelfederelement ausgebildet, mit dem in Alleinstellung kein definierter Abstand zwischen den Statormagneten einstellbar wäre. Der zweite, insbesondere als Federelement ausgebildete Abstandhalter ist derart angeordnet, dass er eine Federkraft auf die einander gegenüberliegenden Statormagnete in Richtung Polgehäuse ausübt. Im Zusammenspiel mit dem ersten Abstandhalter wird jedoch ein definierter Abstand zwischen den Statormagneten eingehalten, insbesondere dann, wenn das mindestens eine Federelement des ersten Abstandhalters bzw. die Federelemente des ersten Abstandhalters schwächer ausgebildet sind als das Federelement des zweiten Abstandhalters, so dass die Federelemente des ersten Abstandhalters überdrückt werden und die Statormagnete unmittelbar an den definierten Anschlägen des ersten Abstandhalters anliegen.

Zur zusätzlichen Sicherung der Statormagnete bzw. zur exakten Lagefixierung sind die Statormagnete bevorzugt an die Innenseite des Polgehäuses angeklebt.

Damit die Statormagnete, auch wenn diese mit dem Polgehäuse verklebt sind, unmittelbar in Bezug auf den Bürstenhalter mit Hilfe der beiden Zentriermittel ausgerichtet werden können, ist in Weiterbildung der Erfindung an einem Befestigungsflansch des Polgehäuses mindestens ein Langloch vorgesehen, durch welches eine mit dem Getriebegehäuse zu verschraubende Befestigungsschraube geführt ist. Das mindestens eine Langloch erlaubt eine Relativverdrehung des Polgehäuses, welches bevorzugt keine Zentriermittel aufweist, zu dem Getriebegehäuse mit dem daran fixierten Bürstenhalter.

Das Polgehäuse lässt sich besonders kostengünstig im Tiefziehverfahren als symmetrisches Tiefziehteil ohne Zentrierungsmittel herstellen.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Explosionsdarstellung eines Polgehäuses mit zwei Statormagneten, zwei Abstandhaltern und einem Lagerteil aus Sintereisen,
- Fig. 2:: die Montageanordnung der in Fig. 1 gezeigten Bauteile,
- Fig. 3:: die Montageanordnung gemäß Fig. 2, die über ein erstes Zentriermittel mit einem zweiten Zentriermittel eines Bürstenhalters zusammenwirkt,
- Fig. 4:: eine Polgehäuseanordnung mit einem alternativ ausgebildeten Abstandhalter,
- Fig. 5:: eine weitere mögliche Ausgestaltungsform eines Abstandhalters, wobei der gezeigte Abstandhalter bereichsweise federnd ausgebildet ist und
- Fig. 6:: den Abstandhalter gemäß Fig. 5 in seiner Montageposition.

### Ausführungsformen der Erfindung

In den Figuren sind gleiche Bauteile und Bauteile mit der gleichen Funktion mit den gleichen Bezugszeichen gekennzeichnet.

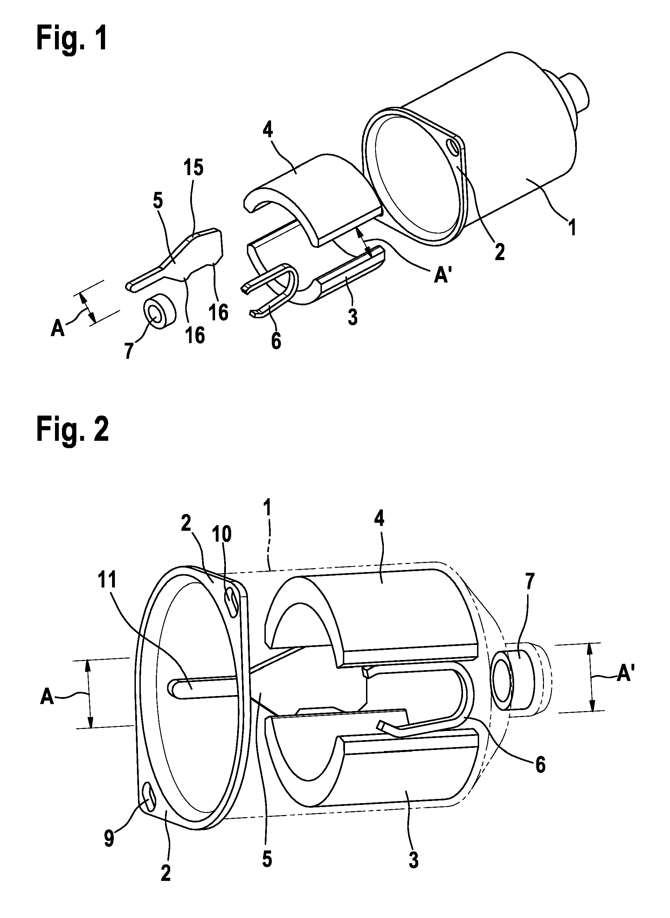

In Fig. 1 sind in einer Explosionsdarstellung ein als Tiefziehteil ausgebildetes, dosenförmiges Polgehäuse 1 mit Befestigungsflansch 2, sowie davon beabstandet zwei zueinander beabstandete als schalenförmige Permanentmagnete ausgebildete Statormagnete 3, 4 sowie ein erster Abstandhalter 5 und ein zweiter Abstandhalter 6 sowie ein Lager 7 für eine nicht dargestellte Motorwelle (Ankerwelle) gezeigt.

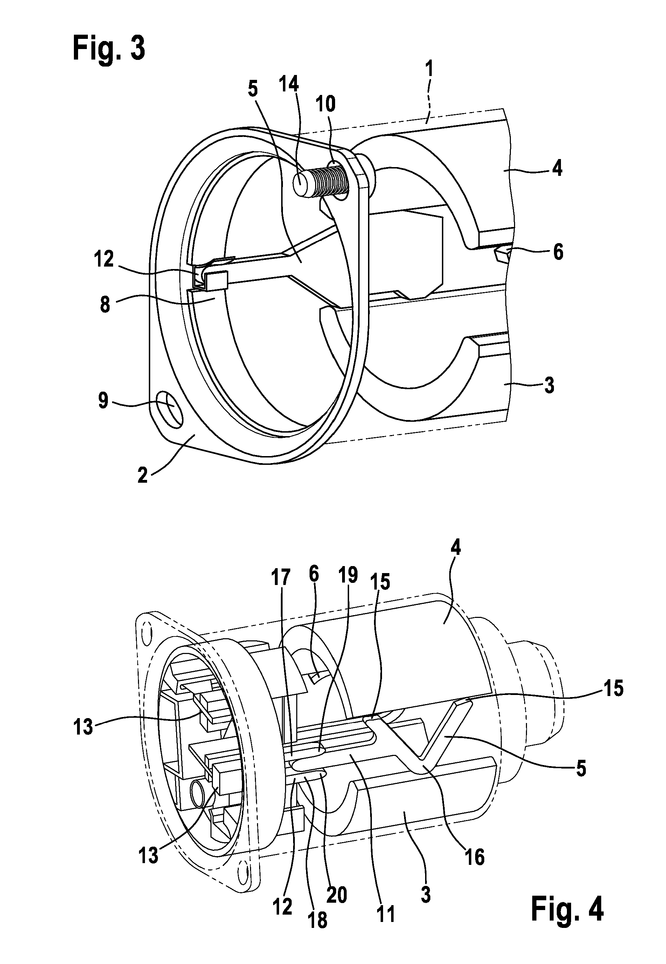

In Fig. 2 befinden sich die Statormagnete 3, 4, die beiden Abstandhalter 5, 6 und das Lager 7 in ihrer Einbauposition innerhalb des Polgehäuses. Die beiden Statormagnete 3, 4 sind in Umfangsrichtung beabstandet zueinander angeordnet, wobei auf jeder Seite des Polgehäuses 1 zwischen den Statormagneten 3, 4 jeweils einer der Abstandhalter 5, 6 angeordnet ist. Bei den Abstandhaltern 5, 6 handelt es sich um Stanzbiegeteile aus Metall. Gegebenenfalls können auch Kunststoffteile vorgesehen werden. Die Statormagnete 3, 4 sind mit ihren äußeren Seiten mit der Innenseite des Polgehäuses 1 verklebt. Um die Statormagnete 3, 4 relativ zu einem in Fig. 3 dargestellten, innerhalb eines nicht gezeigten Getriebegehäuses fixierten Bürstenhalters 8 ausrichten zu können, weist der Befestigungsflansch 2 auf zwei gegenüberliegenden Seiten jeweils ein Langloch 9, 10 auf, durch welche entsprechende Befestigungsschrauben 14 zur Fixierung des Polgehäuses 1 an dem nicht gezeigten Getriebegehäuse geführt werden können.

Der erste Abstandhalter 5 ist mit einem als Zentriernase ausgebildeten ersten Zentriermittel 11 ausgestattet, welches in Richtung des Bürstenhalters 8 weist. Wie aus Fig. 3 zu erkennen ist, ist das erste Zentriermittel 11 in einem als Aufnahmetasche ausgebildeten zweiten Zentriermittel 12 am Bürstenhalter 8 aufgenommen, so dass die Statormagnete 3, 4 eine definierte Relativposition (Winkelposition) zu dem Bürstenhalter 8 mit seinen in Fig. 4 deutlich zu erkennenden Kohlebürsten 13 einnimmt. Die Kohlebürsten 13 wirken in an sich bekannter Weise mit einem auf der nicht gezeigten Ankerwelle angeordneten, nicht gezeigten Kommutator zusammen, der die ebenfalls nicht gezeigten Ankerwicklungen mit Strom versorgt.

Wie insbesondere aus Fig. 1 ersichtlich ist, ist der erste Abstandhalter 5 als starres, flächiges Teil ausgebildet, das an seiner in der Zeichnungsebene oberen Seite einen ersten Anschlag 15 für den Statormagneten 4 aufweist und auf der gegenüberliegenden Seite mit zwei zweiten Anschlägen 16 für den Statormagneten 3 versehen ist. Durch die voneinander definiert beabstandeten Anschläge 15, 16 wird ein definierter Abstand A (Mindestabstand) zwischen den Statormagneten 3, 4 in der in Fig. 2 gezeigten Montageposition eingehalten. Der zweite Abstandhalter 6 ist als Bügelfeder ausgebildet, die die beiden Statormagnete 3, 4 in entgegengesetzte Richtungen in Umfangsrichtung sowie in Richtung des Polgehäuses 1 federkraftbeaufschlagt, so dass die Statormagnete 3, 4 definiert an den Anschlägen 15, 16 anliegen, wodurch zwangsläufig auch auf der dem ersten Abstandhalter 5 gegenüberliegenden Seite ein definierter Abstand A' zwischen den Magneten eingehalten wird, wobei bevorzugt gilt A = A'.

Bei dem Ausführungsbeispiel gemäß Fig. 4 ist der zweite Abstandhalter 6 wieder als Bügelfederelement ausgebildet. Der erste Abstandhalter 5 ist nicht als flächiges Bauteil ausgebildet, sondern V-förmig konturiert, wobei von den freien Enden der V-förmig angeordneten Schenkel erste Anschläge 15 für den Statormagneten 4 und auf der gegenüberliegenden Seite ein zweiter Anschlag 16 für den Statormagneten 3 gebildet sind. Aus Fig. 4 ist deutlich zu erkennen, dass das zweite Zentriermittel 12 von zwei benachbarten Stegen 17, 18 gebildet ist, die in Richtung des ersten Abstandhalters 5 weisen und die jeweils mit einer Einlaufschräge 19, 20 versehen sind.

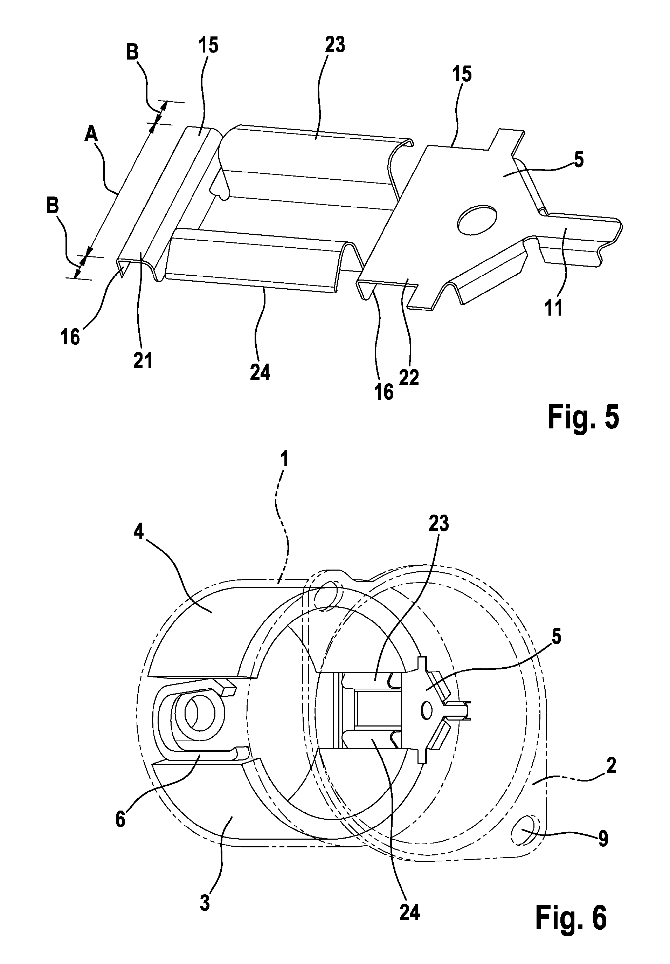

In Fig. 5 ist eine weitere alternative Ausführungsform eines ersten Abstandhalter 5 gezeigt. Der Abstandhalter 5 gemäß Fig. 5 ist als Stanzbiegeteil mit zwei biegesteifen Bereichen 21, 22 ausgebildet, die auf zwei gegenüberliegenden Seiten des Abstandhalters 5 definierte Anschläge 15, 16 für die Statormagnete 4, 3 bilden. In einem vorderen Bereich ist der erste Abstandhalter 5 gemäß Fig. 5 mit einem als Zentriernase ausgebildeten ersten Zentriermittel 11 versehen. Der Abstand A zwischen den ersten und zweiten Anschlägen 15, 16 wird in zwei Richtungen von jeweils einem Federelement 23, 24 im nicht montierten Zustand überragt, so dass der erste Anschlag 5 in zwei den Abstand A in Richtung der Statormagneten überschreitenden Bereichen B federnd ausgebildet ist.

In Fig. 6 ist der erste Abstandhalter 5 in seiner Montageposition gezeigt. Der zweite Abstandhalter 6 ist dabei als Bügelfeder mit zwei Federschenkeln ausgebildet. Die Bügelfeder (zweiter Abstandhalter 6) weist eine größere Federkraft auf als beide Federelemente 23, 24 des ersten Abstandhalters 5, wodurch die Federelemente 23, 24 im Montagezustand überdrückt werden und somit die Statormagnete 3, 4 auf den ersten und zweiten Anschlägen 15, 16 des ersten Abstandhalters 5 anliegen. Die Federelemente 23, 24 üben dabei eine Federkraft auf die Statormagnete 3, 4 auf, so dass diese sich nicht aus ihrer Montageposition lösen können.

## Patentansprüche

1. Polgehäuseanordnung eines elektrischen Antriebsmotors, insbesondere für Wischvorrichtungen in Kraftfahrzeugen, mit mindestens zwei in einem Polgehäuse (1) voneinander beabstandet angeordneten Statormagneten (4) und mit einem Bürstenhalter (8),
wobei zwischen den Statormagneten (3, 4) mindestens ein erster Abstandhalter (5) mit einem ersten Zentriermittel (11) vorgesehen ist, das mit einem an dem Bürstenhalter (8) vorgesehenen zweiten Zentriermittel (12) zur Zentrierung der Statormagneten (3, 4) relativ zu dem Bürstenhalter (8) zusammenwirkt,
wobei der erste Abstandhalter (5) bereichsweise federnd ausgebildet ist, **dadurch gekennzeichnet,**
**dass** der erste Abstandhalter (5) mindestens zwei beabstandete Anschläge (15, 16) für die Statormagneten (3, 4) aufweist, von denen ein definierter Mindestabstand (A) zwischen den Statormagneten (3, 4) begrenzt ist,
und **dass** der erste Abstandhalter (5) mindestens ein Federelement (23, 24) aufweist, das im nicht montierten Zustand zumindest einen der Anschläge (15, 16) überragend angeordnet ist.

2. Polgehäuseanordnung nach Anspruch 1, **dadurch gekennzeichnet, dass** das erste Zentriermittel (11) als sich in Richtung des Bürstenhalters (8) erstreckende Zentriernase und das zweite Zentriermittel (12) als Aufnahmetasche zur Aufnahme der Zentriernase ausgebildet ist.

3. Polgehäuseanordnung nach einem der vorhergehenden Ansprüche, **dadurch gekennzeichnet, dass** ein zweiter Abstandhalter (6) vorgesehen ist, der vorzugsweise als Federelement (23, 24), insbesondere als Bügelfederelement ausgebildet ist.

4. Polgehäuseanordnung nach einem der vorhergehenden Ansprüche, **dadurch gekennzeichnet, dass** die Statormagnete (3, 4) mit dem Polgehäuse (1) verklebt sind.

5. Polgehäuseanordnung nach einem der vorhergehenden Ansprüche, **dadurch gekennzeichnet, dass** das Polgehäuse (1) zentrierungsmittelfrei ausgebildet ist.

6. Polgehäuseanordnung nach einem der vorhergehenden Ansprüche, **dadurch gekennzeichnet, dass** an einem Befestigungsflansch (2) des Polgehäuses (1) mindestens ein Langloch (9, 10) zur Fixierung des Polgehäuses (1) an einem Getriebegehäuse angeordnet sind.

7. Polgehäuseanordnung nach einem der vorhergehenden Ansprüche, **dadurch gekennzeichnet, dass** das Polgehäuse (1) ein Tiefziehteil ist.

## Claims

1. Pole housing arrangement of an electric drive motor, in particular for wiper apparatuses in motor vehicles, comprising at least two stator magnets (4), which are arranged at a distance from one another in a pole housing (1), and comprising a brush holder (8), wherein at least one first spacer (5) with a first centring means (11) is provided between the stator magnets (3, 4), the said first centring means interacting with a second centring means (12), which is provided on the brush holder (8), for centring the stator magnets (3, 4) relative to the brush holder (8), wherein the first spacer (5) is of resilient design in regions, **characterized in that** the first spacer (5) has at least two spaced-apart stops (15, 16) for the stator magnets (3, 4), a defined minimum distance (A) between the stator magnets (3, 4) being delimited by the said stops, and **in that** the first spacer (5) has at least one spring element (23, 24) which is arranged so as to project beyond at least one of the stops (15, 16) in the unassembled state.

2. Pole housing arrangement according to Claim 1, **characterized in that** the first centring means (11) is in the form of a centring lug which extends in the direction of the brush holder (8), and the second centring means (12) is in the form of a receiving pocket for receiving the centring lug.

3. Pole housing arrangement according to either of the preceding claims, **characterized in that** a second spacer (6) is provided, the said second spacer preferably being in the form of a spring element (23, 24), in particular in the form of a clip spring element.

4. Pole housing arrangement according to one of the preceding claims, **characterized in that** the stator magnets (3, 4) are adhesively bonded to the pole housing (1).

5. Pole housing arrangement according to one of the preceding claims, **characterized in that** the pole housing (1) is designed without centring means.

6. Pole housing arrangement according to one of the preceding claims, **characterized in that** at least one elongate hole (9, 10) for fixing the pole housing (1) to a gear mechanism housing is arranged on a fastening flange (2) of the pole housing (1).

7. Pole housing arrangement according to one of the preceding claims, **characterized in that** the pole housing (1) is a deep-drawn/thermoformed part.

## Revendications

1. Agencement de carcasse de stator d'un moteur d'entraînement électrique, en particulier pour des dispositifs d'essuie-glace dans des véhicules automobiles, comprenant au moins deux aimants statoriques (4) disposés à distance l'un de l'autre dans une carcasse de stator (1) et un porte-balais (8),
au moins un premier élément d'espacement (5) avec un premier moyen de centrage (11) étant prévu entre les aimants statoriques (3, 4), lequel premier moyen de centrage coopère avec un deuxième moyen de centrage (12) prévu au niveau du porte-balais (8) pour le centrage des aimants statoriques (3, 4) par rapport au porte-balais (8), le premier élément d'espacement (5) étant réalisé en partie de manière élastique, **caractérisé en ce que**
le premier élément d'espacement (5) présente au moins deux butées espacées (15, 16) pour les aimants statoriques (3, 4), lesquelles délimitent une distance minimale définie (A) entre les aimants statoriques (3, 4),
et **en ce que** le premier élément d'espacement (5) présente au moins un élément de ressort (23, 24) qui est disposé, dans l'état non monté, de manière à faire saillie par-dessus au moins l'une des butées (15, 16).

2. Agencement de carcasse de stator selon la revendication 1, **caractérisé en ce que** le premier moyen de centrage (11) est réalisé sous forme d'ergot de centrage s'étendant dans la direction du porte-balais (8) et le deuxième moyen de centrage (12) est réalisé sous forme de cavité de réception pour recevoir l'ergot de centrage.

3. Agencement de carcasse de stator selon l'une quelconque des revendications précédentes, **caractérisé en ce qu'**il est prévu un deuxième élément d'espacement (6) qui est réalisé de préférence sous forme d'élément de ressort (23, 24), en particulier sous la forme d'un élément d'étrier de ressort.

4. Agencement de carcasse de stator selon l'une quelconque des revendications précédentes, **caractérisé en ce que** les aimants statoriques (3, 4) sont collés à la carcasse de stator (1).

5. Agencement de carcasse de stator selon l'une quelconque des revendications précédentes, **caractérisé en ce que** la carcasse de stator (1) est réalisée sans moyen de centrage.

6. Agencement de carcasse de stator selon l'une quelconque des revendications précédentes, **caractérisé en ce qu'**au moins un trou oblong (9, 10) pour la fixation de la carcasse de stator (1) à un carter de transmission est disposé au niveau d'une bride de fixation (2) de la carcasse de stator (1).

7. Agencement de carcasse de stator selon l'une quelconque des revendications précédentes, **caractérisé en ce que** la carcasse de stator (1) est une partie emboutie profond.
